# EUROPEAN PATENT APPLICATION

(11) **EP 4 325 540 A1**
(43) Date of publication of application: **21.02.2024**
(21) Application number: 22788012.7
(22) Date of filing: 28.03.2022
(51) Int. Cl.: H01G 13/00, H01F 41/10, H01G 4/30

(54) **INTAGLIO JIG FOR MANUFACTURING ELECTRONIC COMPONENT**

(30) Priority: 16.04.2021 JP 2021069593
(71) Applicant: Creative Coatings Co., Ltd., Tokyo, 113-0023 (JP)
(72) Inventor: SATO, Eiji, Tokyo 162-0842 (JP); SAKAMOTO, Hitoshi, Tokyo 162-0842 (JP)
(74) Representative: Wunderlich & Heim Patentanwälte Partnerschaftsgesellschaft mbB
(86) International application number: PCT/JP2022/015062
(87) International publication number: WO 2022/220087

(57) **Abstract**

An intaglio jig (100, 300) for manufacturing an electronic component (10, 200) having an external electrode (30 to 38, 240, 250) by applying a conductive paste (P) to an electronic component body (20, 210) includes an elastic body (110, 310), and a recessed portion (120, 320) that is formed in the elastic body and in which the conductive paste is contained. The recessed portion includes an opening (121, 321) having an opening width (W2, W6) that conforms to a width (W1, W5) of the external electrode, a bottom surface (122, 322) at a predetermined depth (D) from the opening, and at least one protrusion portion (130 to 132, 330) in which a protrusion height (H1, H2) locally protruding from the bottom surface is less than the predetermined depth (D).

## Description

### TECHNICAL FIELD

The present invention relates to an intaglio jig for manufacturing an electronic component such as a multi-terminal multilayer capacitor, for example.

### BACKGROUND ART

For example, in a method of forming an external electrode in a multi-terminal multilayer capacitor, known baking methods can be used in addition to known dry plating methods, for example, sputtering methods, vapor deposition method or CVD methods, according to Patent Document 1. The baking method is a method in which a conductive paste is applied by roller coating, printing or the like, and thereafter baked.

### RELATED-ART DOCUMENT

### PATENT DOCUMENT

Patent Document 1: JP-A-2020-150099

### SUMMARY OF THE INVENTION

### TECHNICAL PROBLEM

Because a sputtering method, a vapor deposition method, and a CVD method require vacuum equipment, the cost of the manufacturing apparatus increases, and in addition, the manufacturing cost of the electronic components also increases. In this regard, a baking method, in particular, an intaglio printing method can also reduce both the cost of the manufacturing apparatus and the manufacturing cost of electronic components.

However, in the intaglio printing method, it is difficult to ensure high dimensional accuracy of the external electrode as compared with a sputtering method, a vapor deposition method, and a CVD method. In particular, as miniaturization of the electronic components such as a multi-terminal multilayer capacitor is advanced more, higher dimensional accuracy of the external electrodes is required.

An object of the invention is to provide an intaglio jig for manufacturing an electronic component that can enhance dimensional accuracy of an external electrode while also reducing manufacturing apparatus cost and electronic component manufacturing cost.

### SOLUTION TO PROBLEM

(1) In accordance with one of some aspects, there is provided an intaglio jig for manufacturing an electronic component having an external electrode by applying a conductive paste to an electronic component body, comprising:
   an elastic body; and
   a recessed portion that is formed in the elastic body and in which the conductive paste is contained,
   the recessed portion including
   an opening having an opening width that conforms to a width of the external electrode,
   a bottom surface at a predetermined depth from the opening, and
   at least one protrusion portion in which a protrusion height locally protruding from the bottom surface is less than the predetermined depth.

According to one aspect (1) of the invention, when the electronic component body is pressed against the elastic body in which the conductive paste is contained in the recessed portion, the elastic body elastically deforms, and the conductive paste in the recessed portion is applied to the electronic component body. By baking the conductive paste applied to the electronic component body, the electronic component having the external electrode is manufactured. Here, when the at least one protrusion portion that protrudes from the bottom surface of the recessed portion is provided, an amount of the conductive paste contained is reduced by a volume of the protrusion portion, and the amount of the conductive paste transferred to an electronic component side can also be reduced in relation to the position of the protrusion portion. Accordingly, the amount of the conductive paste to be applied becomes an appropriate amount, and dimensional accuracy of the external electrode can be enhanced. Further, when the total area of the surfaces defining the recessed portion is increased by providing the at least one protrusion portion, a frictional force received when the conductive paste protrudes from the recessed portion increases. It is conceivable that fluidity of the conductive paste in the recessed portion is inhibited accordingly and the amount of the conductive paste transferred to the electronic component body side is reduced.

(2) In the one aspect (1) of the invention, the opening is in the rectangular shape in plan view in which the opening width is shorter than the opening length, and the recessed portion includes both side surfaces facing each other in a direction of the opening width, and the at least one protrusion portion can be at least one step portion that is formed on at least one of both the side surfaces. In this way, the amount of the conductive paste to be contained in a vicinity of at least one of both the side surfaces of the recessed portion is reduced by a volume of the at least one step portion. Accordingly, the amount of the conductive paste that oozes outside from the recessed portion beyond at least one end of the opening width of the recessed portion is reduced, and therefore the dimensional accuracy of the width of the external electrode (conductive paste) can be enhanced.

(3) In one aspect (2) of the invention, the at least one step portion can contain two step portions formed on both the side surfaces. In this way, amounts of the conductive paste contained in vicinities of both the side surfaces of the recessed portion are reduced by volumes of the two step portions. Accordingly, the amounts of the conductive paste oozing outside from the recessed portion beyond both ends of the opening width of the recessed portion respectively are reduced, so that the dimensional accuracy of the width of the external electrode (conductive paste) can be more enhanced.

(4) In one aspect (3) of the invention, the two step portions are preferably disposed in line symmetry with respect to the center line that bisects the opening width. In this way, the amounts of the conductive paste contained in the vicinities of both the side surfaces of the recessed portion are uniformly reduced by the volumes of the two step portions. Accordingly, the amounts of the conductive paste oozing outside from the recessed portion beyond both the ends of the opening width of the recessed portion respectively are uniformly reduced, and therefore the dimensional accuracy of the width of the external electrode (conductive paste) can be more enhanced.

(5) In the one aspect (1) of the invention, at least two grooves can be included in the plane of the bottom surface in plan view, and the at least one protrusion portion may be disposed between the at least two grooves. Since the amount of the conductive paste contained is reduced by the volume of the at least one protrusion portion that is formed between the at least two grooves, the amount of the conductive paste to be transferred to the electronic component side can also be reduced. In addition, the conductive paste contained in the at least two grooves is less likely to protrude from the grooves by friction received from the surfaces defining the grooves. Accordingly, the fluidity of the conductive paste in the recessed portion is inhibited. By the action of both the reduction of the volume of the conductive paste in the recessed portion and the inhibition of the fluidity, the amount of the conductive paste applied to the electronic component body becomes an appropriate amount, and the dimensional accuracy of the external electrode can be enhanced.

(6) In one aspect (5) of the invention, the at least two grooves can include a grid-shaped groove in the plane of the bottom surface in plan view, and the at least one protrusion portion may be disposed at a position surrounded by the grid-shaped groove. By increasing the number of grooves and the number of protrusion portions in this way, the amount of the conductive paste applied to the electronic component body becomes an appropriate amount, and the dimensional accuracy of the external electrode can be more enhanced.

(7) In one aspect (6) of the invention, the grid-shaped groove and the at least one protrusion portion are preferably disposed in line symmetry with respect to the center line that bisects the opening width. In this way, the amounts of the conductive paste applied to the electronic component body on both sides of the center line become appropriate amounts and uniform, and the dimensional accuracy of the external electrode can be more enhanced.

### BRIEF DESCRIPTION OF THE DRAWINGS

FIG. 1 is a schematic perspective view of a multi-terminal multilayer capacitor that is an example of an electronic component.
FIG. 2 is a plan view of an intaglio jig according to a first embodiment of the invention.
FIG. 3 is a sectional view taken along line A-A of FIG. 2.
FIG. 4 is a sectional view illustrating a state where a conductive paste is filled in a recessed portion illustrated in FIG. 3.
FIG. 5 is a sectional view showing an applying operation (conductive paste is omitted) that presses an electronic component body against the intaglio jig having the recessed portion illustrated in FIG. 3.
FIG. 6 is a schematic view illustrating a shape of the conductive paste that is applied onto the electronic component body by the applying operation illustrated in FIG. 5.
FIG. 7 is a sectional view illustrating a comparative example of the section taken along line A-A in FIG. 2.
FIG. 8 is a sectional view illustrating a state in which a conductive paste is filled in a recessed portion of the comparative example illustrated in FIG. 7.
FIG. 9 is a sectional view illustrating an applying operation (conductive paste is omitted) that presses an electronic component to an intaglio jig having a recessed portion of the comparative example illustrated in FIG. 7.
FIG. 10 is a schematic view illustrating a shape of the conductive paste that is applied onto the electronic component body by the applying operation of the comparative example illustrated in FIG. 9.
FIG. 11 is a schematic perspective view of a multi-terminal multilayer capacitor that is another example of the electronic component.
FIG. 12 is a plan view of an intaglio jig that is a second embodiment of the invention.
FIG. 13 is a partial plan view of a recessed portion illustrated in FIG. 12.
FIG. 14 is a sectional view of the recessed portion illustrated in FIG. 12.
FIG. 15 is a schematic view illustrating a shape of a conductive paste that is applied onto an electronic component body by the intaglio jig according to the second embodiment.
FIG. 16 is a schematic view illustrating a shape of a conductive paste that is applied onto an electronic component body by an intaglio jig of a comparative example.

### DESCRIPTION OF EMBODIMENTS

In the following disclosure, different embodiments and examples for carrying out different features of the presented subject matter are described. As a matter of course, these are merely examples, and are not intended to be restrictive. Further, in the present disclosure, reference numerals and/or characters may be repeated in various examples. This repetition is for the sake of brevity and clarity and is not required to have a relationship between itself and various embodiments and/or described configurations. Furthermore, when the first element is describe as "connected" or "coupled" to the second element, such description includes embodiments in which the first element and the second element are directly connected or coupled, and also includes embodiments in which the first element and the second element have one or more other elements interposed therebetween and are indirectly connected or coupled to each other. Further, when the first element is described as "moving" relative to the second element, such description includes an embodiment of relative movement in which at least one of the first element and the second element moves relative to the other.

### 1. First Embodiment

### 1.1. Electronic Component

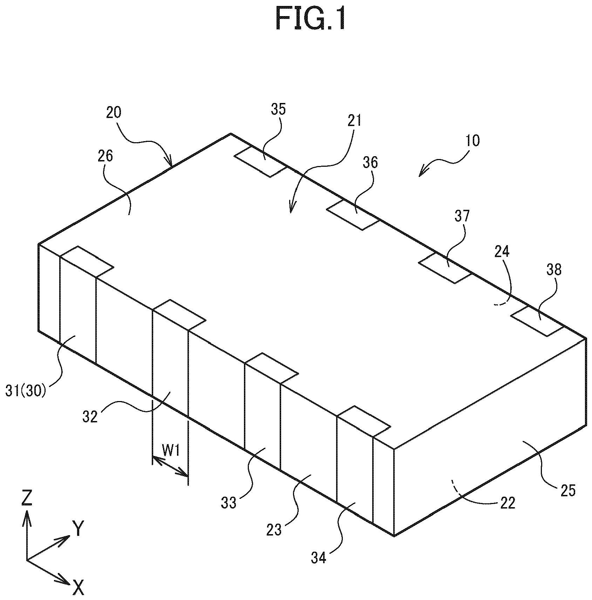

FIG. 1 illustrates a multi-terminal multilayer capacitor that is an example of an electronic component. A multi-terminal multilayer capacitor 10 has a capacitor body (electronic component body) 20, and an external electrode 30, for example, eight external electrodes 31 to 38. The capacitor body 20 has two main surfaces 21 and 22 facing each other, two side surfaces 23 and 24 coupling the main surfaces 21 and 22, and two end surfaces 25 and 26 coupling the main surfaces 21 and 22.

The external electrodes 31 to 34 are formed at intervals in an X direction on the one side surface 23. The external electrodes 35 to 38 are formed at intervals in the X direction on the other side surface 24. Each of the external electrodes 31 to 38 has a width W1 in the X direction illustrated in FIG. 1. The width W1 is, for example, 0.1 to 1.0 mm. Further, each of the external electrodes 31 to 38 has a same length as a height of the side surfaces 23 and 24 in a Z direction illustrated in FIG. 1, and both ends in a lengthwise direction thereof extend onto the main surfaces 21 and 22.

### 1.2. Intaglio Jig for Manufacturing Electronic Component

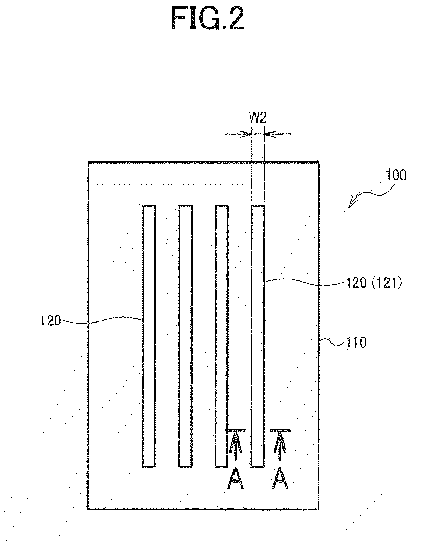

FIG. 2 illustrates an intaglio jig 100 that applies a conductive paste that is a material of the external electrode 30 to the capacitor body 20. The intaglio jig 100 has an elastic body, for example, a rubber plate 110, and at least one, for example, four recessed portions 120 formed in the rubber plate 110. A plurality of capacitor bodies 20 are pressed against the intaglio jig 100, and the conductive paste is simultaneously applied to positions where the four external electrodes 31 to 34 (35 to 38) of each of the capacitor bodies 20 are formed. Each of the four recessed portions 120 and openings 121 thereof is, for example, rectangular in plan view, and an opening width W2 thereof is shorter than an opening length.

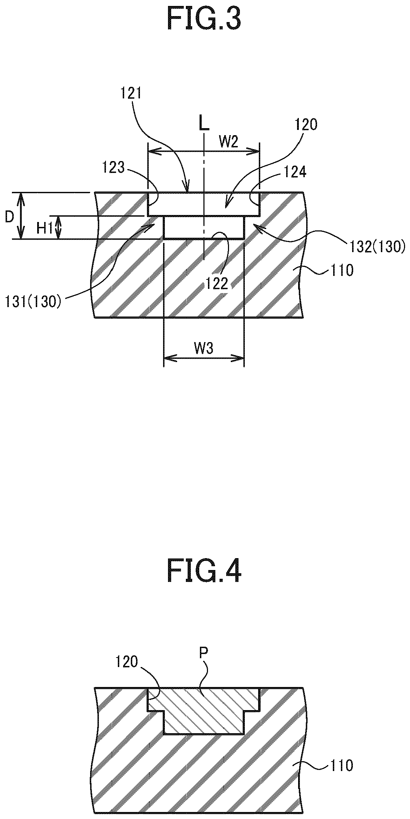

Details of the recessed portion 120 illustrated in FIG. 2 will be described with reference to FIG. 3 that is a section taken along line A-A in FIG. 2. The recessed portion 120 has the opening 121, a bottom surface 122, both side surfaces 123 and 124 facing in a width direction of the opening width W2, and at least one protrusion portion 130 (131, 132). Note that in FIG. 2, the at least one protrusion portion 130 (131, 132) is omitted. As illustrated in FIG. 2, the opening 121 is rectangular in plan view, and has the opening width W2 (W2≥W1) that conforms to the width W1 of the external electrode 30. In the present embodiment, the opening width W2 is slightly wider than the width W1 of the external electrode 30 (W2>>W1). The bottom surface 122 has a predetermined depth D from the opening 121. Both the side surfaces 123 and 124 are surfaces that rise from the bottom surface 122 to the opening 121. In the at least one protrusion portion 130 (131, 132), a protrusion height H1 locally protruding from the bottom surface 122 is less than the depth D of the bottom surface.

At least one protrusion portion 130 can be at least one step portion 131 or 132 that makes a width W3 of the bottom surface 122 having the depth D narrower than the opening width W2, and is formed on at least one of both the side surfaces 123 and 124. In the present embodiment, the at least one protrusion portion 130 is two step portions 131 and 132 formed on both the side surfaces 123 and 124. The two step portions 131 and 132 are arranged in line symmetry with respect to a center line L that bisects the opening width W2. The two step portions 131 and 132 are continuously formed in a longitudinal direction of the recessed portion 120 illustrated in FIG. 2. However, the two step portions 131 and 132 may be discontinuously formed in the longitudinal direction of the recessed portion 120 illustrated in FIG. 2.

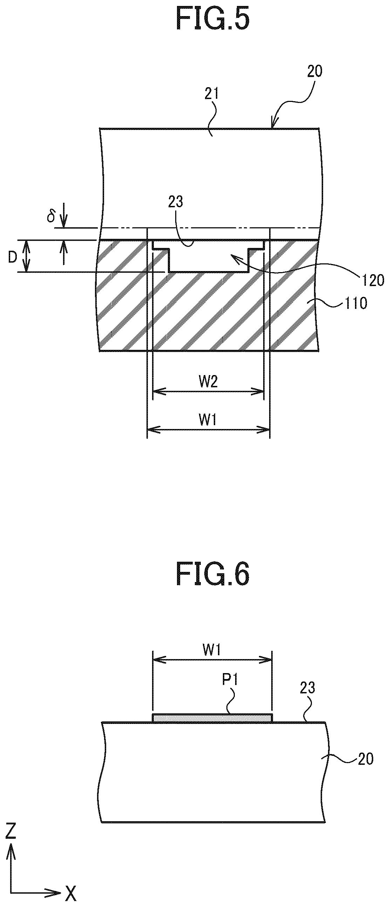

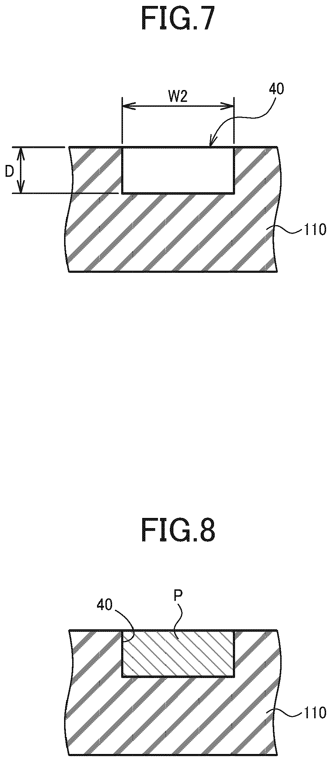

FIG. 4 and FIG. 6 are views illustrating operations of the intaglio jig 100 illustrated in FIG. 2 and FIG. 3. The operation of the intaglio jig 100 will be described with reference to FIG. 7 to FIG. 10 that illustrates a comparative example. A recessed portion 40 of the comparative example illustrated in FIG. 7 is common to the present embodiment in terms of the opening width W2 and the depth D, but differs from the present embodiment in that the recessed portion 40 does not have a protrusion portion or a step portion 130 (131, 132) illustrated in FIG. 3.

FIG. 4 illustrates a state where a conductive paste P is filled in the recessed portion 120 illustrated in FIG. 3. The conductive paste P is applied to the rubber plate 110 illustrated in FIG. 1 with a uniform thickness, and thereafter scraped by a squeegee. Accordingly, the conductive paste P is filled in the recessed portion 120 so as to be substantially flush with a surface of the rubber plate 110. Compared with FIG. 8 that is the comparative example, an amount of the conductive paste P filled in the recessed portion 120 illustrated in FIG. 4 is smaller than an amount of the conductive paste P that is filled in the recessed portion 40 illustrated in FIG. 8. This is because in FIG. 4, a capacity of the recessed portion 120 is reduced by a volume of the two step portions 131 and 132, and thereby the amount of the conductive paste P that is contained in the recessed portion 120 also reduces.

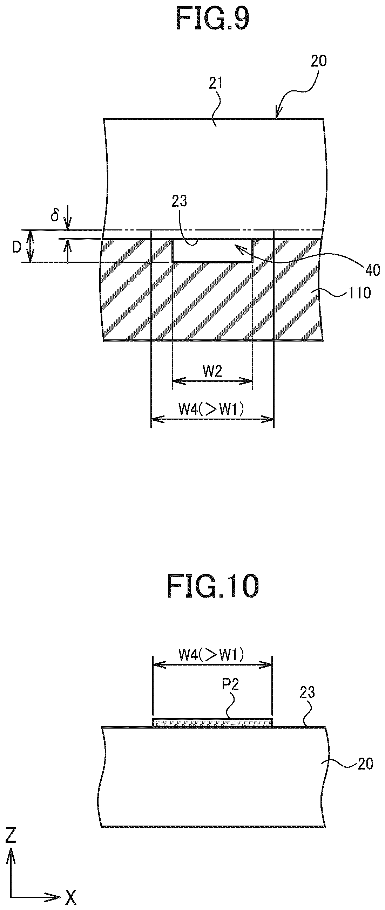

FIG. 5 illustrates an applying operation by pressing the one side surface 23 of the capacitor body 20 to the intaglio jig 100 having the recessed portion 120 illustrated in FIG. 3. However, in FIG. 5, the conductive paste P contained in the recessed portion 120 is omitted. As illustrated in FIG. 5, the rubber plate 110 pressed by the capacitor body 20 is elastically deformed (compressed) by a dimension δ. Thereby, the capacitor body 20 enters the recessed portion 120 by the dimension δ, and the conductive paste P in the recessed portion 120 is transferred to the capacitor body 20. This applying operation similarly applies in FIG. 9 that is the comparative example.

FIG. 6 schematically illustrates a shape of a conductive paste P1 applied by the applying operation illustrated in FIG. 5. Similarly, FIG. 10 schematically illustrates a shape of a conductive paste P2 applied by an applying operation illustrated in FIG. 9. The applied conductive paste P1 illustrated in FIG. 6 has a width equal to the width W1 of a design value and has a substantially uniform thickness over the width. On the other hand, the applied conductive paste P2 illustrated in FIG. 10 that is the comparative example is formed to have a width W4 wider than the width W1 of the design value (W4>W1).

As one of reasons for the applied conductive paste P1 illustrated in FIG. 6 having the substantially uniform thickness over the width W1 of the design value, there is cited the fact that as illustrated in FIG. 4, a total amount of the conductive paste P filled in the recessed portion 120 is reduced as compared with FIG. 8. In particular, due to the presence of the two step portions 131 and 132 formed on both the side surfaces 123 and 124, amounts of the conductive paste P oozing outside of the recessed portion 120 beyond both ends of the opening width W2 from the opening 121 are reduced. Further, the amounts of the conductive paste P oozing outside of the recessed portion 120 beyond both the ends of the opening width W2 of the recessed portion 120 are uniformly reduced. Therefore, the width W1 of the applied conductive paste P1 becomes a design value slightly wider than the opening width W2 of the recessed portion 120, and the thickness is also uniform.

On the other hand, as for the applied conductive paste P2 in FIG. 10 that is the comparative example, amounts of the conductive paste P2 oozing outside of the recessed portion 40 beyond both the ends of the opening width W2 of the recessed portion 40 in FIG. 9 increase. Accordingly, the width W4 of the applied conductive paste P2 in FIG. 10 becomes wider than the width W1 of the design dimension.

Note that the recessed portion 120 of the intaglio jig 100 is not limited to that illustrated in FIG. 3 as long as the recessed portion 120 has the at least one protrusion portion 130 in which the protrusion height locally protruding from the bottom surface 122 is less than the depth D of the recessed portion 120. Thereby, it is possible to carry out various modifications for the position and the number of the protrusion portions 130.

### 2. Second Embodiment

### 2.1. Electronic Component

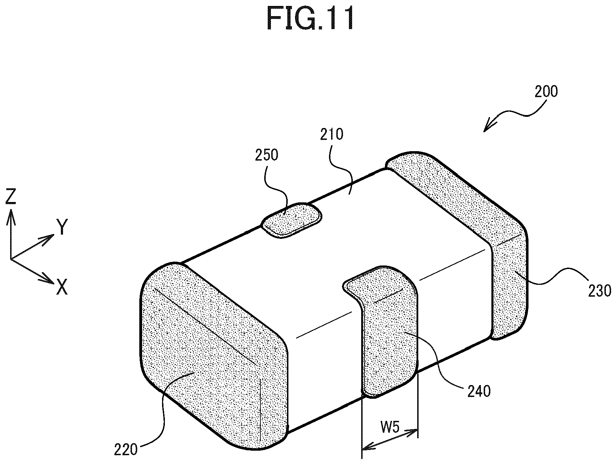

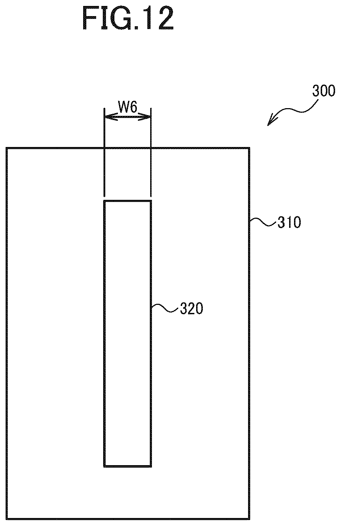

The electronic component can be any electronic component as long as a conductive paste for at least one external electrode can be applied and formed thereon by using the intaglio jig 100, and the type of the electronic component, and the shape and the number of external electrodes are not limited. FIG. 11 illustrates a multi-terminal multilayer capacitor that is another example of the electronic component. A multi-terminal multilayer capacitor 200 illustrated in FIG. 11 has external electrodes 220 to 250 formed on a capacitor body 210. The external electrodes 220 and 230 are two-terminal through-electrodes formed at both end portions in a longitudinal direction Y of the capacitor body 210. The external electrodes 240 and 250 are two ground electrodes formed at both end portions in a short side direction X of the capacitor body 210. The through-electrodes 220 and 230 are formed by application involving immersion in a conductive paste on a surface plate, but the two ground electrodes 240 and 250 can be formed by using an intaglio jig 300 illustrated in FIG. 12. Here, a width W5 of the external electrodes 240 and 250 illustrated in FIG. 11 is preferably wider than each of the widths W1 of the external electrodes 31 to 38 illustrated in FIG. 1. The width W5 is, for example, 1.0 to 3.0 mm.

### 2.2. Intaglio Jig for Manufacturing Electronic Component

FIG. 12 to FIG. 14 illustrate an intaglio jig of a second embodiment. FIG. 12 illustrates the intaglio jig 300 that applies a conductive paste that is a material of the external electrodes 240 and 250 to the capacitor body 210. The intaglio jig 300 has an elastic body, for example, a rubber plate 310, and at least one recessed portion 320 formed in the rubber plate 310. A plurality of capacitor bodies 210 are pressed against the intaglio jig 300, and the conductive paste is simultaneously applied to a position where the external electrode 240 (250) of each of the capacitor bodies 210 is formed. The recessed portion 320 and an opening 321 are, for example, rectangular in plan view, and an opening width W6 is shorter than an opening length.

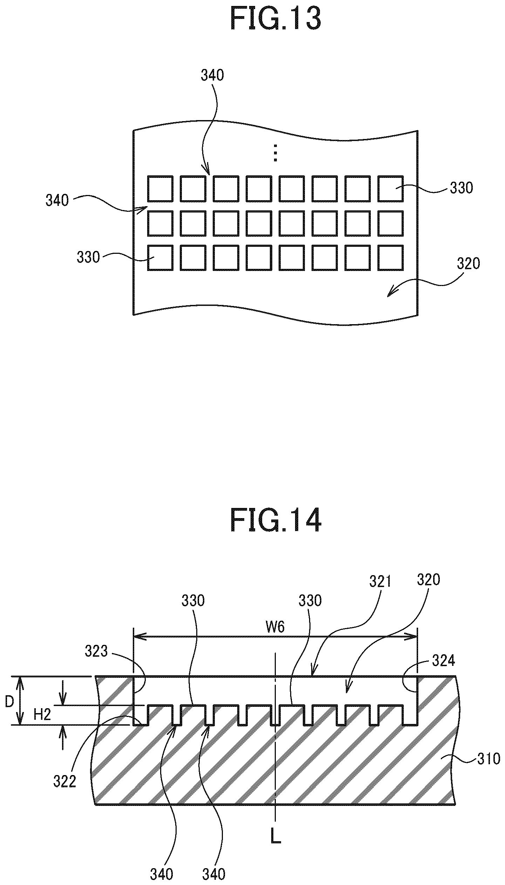

Details of the recessed portion 320 illustrated in FIG. 12 will be described with reference to FIG. 13 that is an enlarged plan view, and FIG. 14 that is a cross-section of FIG. 12. In FIG. 13 and FIG. 14, the recessed portion 320 has the opening 321, a bottom surface 322, both side surfaces 323 and 324 facing each other in a width direction of the opening width W6, and at least one, for example, a plurality of protrusion portions 330. Note that in FIG. 12, the plurality of protrusion portions 330 are omitted. The opening 321 is rectangular in plan view as illustrated in FIG. 12 and has the opening width W6 (W6≥W5) that conforms to the width W5 of the external electrode 240 (250). In the present embodiment, the opening width W6 is slightly wider than the width W5 of the external electrode 240 (250) (W6>>W5). The bottom surface 322 has a predetermined depth D from the opening 321. Both the side surfaces 323 and 324 are surfaces that rise to the opening 321 from the bottom surface 322. In the plurality of protrusion portions 330, a protrusion height H2 locally protruding from the bottom surface 322 is less than the depth D of the bottom surface 322.

As illustrated in FIG. 13, in plan view of the intaglio jig 300 seen from above, the recessed portion 320 can include at least two grooves 340 within a plane of the bottom surface 322. In this way, the at least one, for example, the plurality of protrusion portions 330 that protrude with the height 2 (H2<D) from the bottom surface 322 are disposed between the at least two grooves 340 and 340. In FIG. 13, the grid-shaped groove 340 is adopted, and many protrusion portions 330 are disposed in positions surrounded by the grid-shaped groove 340. The grid-shaped groove 340 is formed continuously in a longitudinal direction of the recessed portion 320 illustrated in FIG. 12. However, the grid-shaped groove 340 may be discontinuously formed in the longitudinal direction of the recessed portion 320 illustrated in FIG. 12.

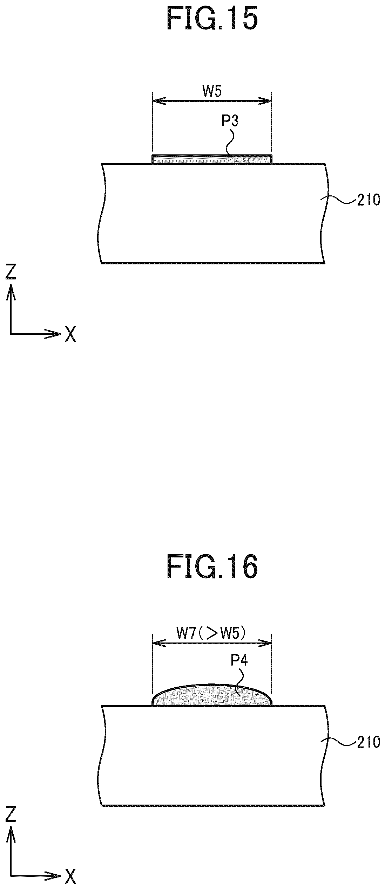

FIG. 15 schematically illustrates a shape of a conductive paste P3 that is applied to the capacitor body 210 by the intaglio jig 300 illustrated in FIG. 12 to FIG. 14. Similarly, FIG. 16 schematically illustrates a shape of a conductive paste P4 that is applied to the capacitor body 210 by an intaglio jig of a comparative example without the groove 340 and protrusion portions 330. The applied conductive paste P3 illustrated in FIG. 15 has a substantially uniform thickness over the width W5 of a design value. On the other hand, the applied conductive paste P4 illustrated in FIG. 16 that is the comparative example is formed over a width W7 that is wider than the width W5 of the design value and has a non-uniform film thickness that is thick at a center in a width direction and thin at both ends.

In the second embodiment, an amount of the conductive paste P contained in the recessed portion 320 is reduced by a volume of the at least one protrusion portion 330 formed between the at least two grooves 140, and therefore, an amount of the conductive paste that is transferred to the capacitor body 210 can be reduced. In addition, the conductive paste P contained in the groove 340 illustrated in FIG. 14 is less likely to protrude from the groove 340 due to friction received from surfaces forming the groove 340. Accordingly, fluidity of the conductive paste P in the recessed portion 320 is inhibited. The amount of the conductive paste applied to the capacitor body 210 becomes an appropriate amount by actions of both the reduction of the amount of conductive paste P contained in the recessed portion 320 and the inhibition of fluidity, and dimensional accuracy of the external electrode 240 (250) can be enhanced.

By increasing the number of grooves 340 as the grid-shaped groove 340 illustrated in FIG. 13 and the number of protrusion portions 330, the amount of the conductive paste that is applied to the capacitor body 210 becomes an appropriate amount, and the dimensional accuracy of the external electrode 240 (250) can be further enhanced. Further, the grid-shaped groove 340 and the at least one protrusion portion 330 are preferably disposed in line symmetry with respect to a center line L that bisects the opening width W6, as illustrated in FIG. 14. In this way, the amounts of the conductive paste P applied to the capacitor body 210 on both sides of the center line L become appropriate amounts and uniform, and the dimensional accuracy of the external electrode 240 (250) ca be more enhanced.

In the comparative example illustrated in FIG. 16, the amount of the conductive paste P that oozes outside from the opening width W6 of the recessed portion becomes larger than in the second embodiment illustrated in FIG. 15, and therefore, the width W7 of the applied conductive paste P4 illustrated in FIG. 16 becomes wider than the width W5 of the design value. In addition, both the end portions of the conductive paste P4 oozing outside from the opening width W6 of the recessed portion and applied to the capacitor body 210 have a thinner film thickness than the center portion of the conductive paste P4 transferred to the capacitor body 210, in a region facing the recessed portion. Therefore, it is considered that the applied conductive paste P4 illustrated in FIG. 16 that is the comparative example has a non-uniform thickness that is thick at the center and thin at both the ends in the width direction.

### REFERENCE SIGN LIST

10, 200 electronic component (multi-terminal multilayer capacitor)
20, 210 electronic component body (capacitor body)
21, 22 main surface
23, 24side surface
25, 26end surface
30 to 38, 240, 250 external electrode
40 recessed portion of comparative example
100, 300 intaglio jig
110, 310 elastic body
120, 320 recessed portion
121, 321 opening
122, 322 bottom surface
123, 124, 323, 324 both side surface
130, 330 protrusion portion
131 132 step portion
340 groove (grid-shaped groove)
D depth
H1, H2 protrusion height
L center line
P conductive paste,
P1 to P4 applied conductive paste
W1, W5 width of external electrode (applied conductive paste)
W2, W6 opening width of recessed portion
W3 width of bottom surface of recessed portion
W4, W7 width of applied conductive paste of comparative example
δ elastic deformation amount (compression amount)

## Claims

1. An intaglio jig for manufacturing an electronic component having an external electrode by applying a conductive paste to an electronic component body, comprising:
an elastic body; and
a recessed portion that is formed in the elastic body and in which the conductive paste is contained,
the recessed portion including
an opening having an opening width that conforms to a width of the external electrode,
a bottom surface at a predetermined depth from the opening, and
at least one protrusion portion in which a protrusion height locally protruding from the bottom surface is less than the predetermined depth.

2. The intaglio jig according to claim 1,
wherein the opening is rectangular in plan view with the opening width shorter than an opening length,
the recessed portion includes both side surfaces facing each other in a direction of the opening width, and
the at least the one protrusion portion is at least one step portion formed on at least one of both the side surfaces.

3. The intaglio jig according to claim 2,
wherein the at least one step portion includes two step portions formed on both the side surfaces.

4. The intaglio jig according to claim 3,
wherein the two step portions are disposed in line symmetry with respect to a center line that bisects the opening width.

5. The intaglio jig according to claim 1,
wherein at least two grooves are included in a plane of the bottom surface in plan view, and
the at least one protrusion portion is disposed between the at least two grooves.

6. The intaglio jig according to claim 5,
wherein the at least two grooves include a grid-shaped groove in the plane of the bottom surface in plan view, and
the at least one protrusion portion is disposed at a position surrounded by the grid-shaped groove.

7. The intaglio jig according to claim 6,
wherein the grid-shaped groove and the at least one protrusion portion are disposed in line symmetry with respect to a center line that bisects the opening width.
